# EUROPEAN PATENT SPECIFICATION

(11) **EP 2 168 324 B1**
(45) Date of publication and mention of the grant of the patent: **19.01.2011**
(21) Application number: 07786728.1
(22) Date of filing: 08.06.2007
(51) Int. Cl.: H04W 36/14

(54) **HANDOVER FROM CIRCUIT SWITCHED DOMAIN TO CIRCUIT SWITCHED SERVICE OVER PACKET SWITCHED DOMAIN**
HANDOVER VON EINER LEITUNGSVERMITTELDOMÄNE IN EINE LEITUNGSVERMITTELTER-DIENST-ÜBER-PAKETVERMITTELT-DOMÄNE
TRANSFERT D'UN DOMAINE À COMMUTATION DE CIRCUIT À UN SERVICE À COMMUTATION DE CIRCUIT SUR UN DOMAINE À COMMUTATION DE PAQUET

(43) Date of publication of application: 31.03.2010
(73) Proprietor: Telefonaktiebolaget L M Ericsson (publ), 164 83 Stockholm (SE)
(72) Inventor: PEHRSSON, Arne, S-SE-141 71 Huddinge (SE); HALLENSTÅL, Magnus, S-SE-187 50 Täby (SE); RUNE, Göran, S-SE-582 52 Linköping (SE); VIKBERG, Jari Tapio, S-SE-153 38 Järna (SE); WITZEL, Andreas, 52134 Herzogenrath (DE)
(74) Representative: Mitchell, Matthew Benedict David
(86) International application number: PCT/EP2007/055679
(87) International publication number: WO 2008/148430

(56) References cited:
- EP-A- 1 182 900
- WO-A-01/31963
- WO-A-2005/099185
- WO-A-2006/040673
- US-A1- 2006 121 916
- 3GPP SA WG2: "Voice Call Continuity between CS and IMS Study (3GPP TR 23.806 version 7.0.0 Release 7)" 3GPP TR 23.806 V7.0.0, XX, XX, December 2005 (2005-12), pages 1-153, XP002385067

## Description

### Technical Field

The invention relates to a handover control mechanism for a mobile communication system. In particular, the invention relates to a method (and apparatus) for triggering the seamless handover of an established connection from a circuit switched domain to circuit switched service over packet switched domain, for example a Voice-over-IP call.

### Background

IP Multimedia (IPMM) services provide a dynamic combination of voice, video, messaging, data, etc, within the same session. By growing the numbers of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) to provide IP Multimedia services over mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminal (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. Other protocols are used for media transmission and control, such as Real-time Transport Protocol and Real-time Transport Control Protocol (RTP/RTCP), Message Session Relay Protocol (MSRP), and Hyper Text Transfer Protocol (HTTP). IMS requires an IP based access network which for example could be a 3GPP Packet Switched (PS) network, or some other access network such a fixed broadband or WiFi network.

A fundamental requirement for real-time service provision is the seamless handover of services for subscribers roaming across cell boundaries of the radio access network (RAN). Traditional circuit switched (CS) based call services have been designed to meet this requirement. In the case of 2G and currently implemented 3G networks, PS real time handover with low latency is not provided for although service continuity is achieved at the terminal side by ordering a session to be moved from one cell to another, i.e. there is no prepare phase to shorten latency when moving cell.

Real time PS handover is standardized in 3GPP for 3G networks, but the feature has not yet been deployed. It is expected that when High-Speed Downlink Packet Access (HSDPA) is deployed, or shortly thereafter, the mechanisms needed for fast PS handover will be also be deployed. In the initial implementation stage, roll-out of this feature across 3G networks will inevitably be patchy. For 2G networks, fast and efficient PS handover procedures in the packet switched (PS) domain within the 2G network (and between 2G and 3G networks) have only recently been standardized in 3GPP TS 43.129 for GSM/EDGE networks but are not yet deployed. Support for PS handover in 2G networks is never likely to be comprehensive (if implemented at all), yet handover of PS calls would be desirable as 2G networks will continue to provide a fallback network for 3G subscribers in the case of limited 3G network coverage. It can also be expected that the next generation radio and core network which are currently being specified under the name LTE (Long Term Evolution) and SAE (System Architecture Evolution) in 3GPP will also have limited coverage, and that these networks will also require fallback to 3G and 2G networks.

It is expected that in the future a major user of PS services will be Voice-over-IP (VoIP) applications. VoIP calls will be particularly sensitive to even relatively minor service interruptions caused by inter-cell handovers. As long as a terminal engaged in a VoIP call can perform PS handover to another cell (the "target cell"), the interruption can be kept short enough to avoid any noticeable drop in perceived quality. However, if either the current cell or the target cell do not support PS handover, a noticeable interruption is likely to occur as packets will be lost during the transition period. Consequently, until all RAN cells support PS handover, the provision of IMS services such as voice and video calls utilising the PS domain are likely to result in users receiving a reduced quality of service when crossing cell boundaries.

Mobile CS services based on GSM and WCDMA radio access are a world-wide success and allow obtaining telecommunication services with a single subscription in almost all countries of the world. Also today, the number of CS subscribers is still growing rapidly, boosted by the role out of mobile CS services in dense population countries such as India and China. This success story is furthermore extended by the evolution of the classical MSC architecture into a softswitch solution which allows using packet transport infrastructure for mobile CS services.

Recently the 3GPP work item "Evolved UTRA and UTRAN" (started in summer 2006) defined a Long-Term Evolution (LTE) concept that assures competitiveness of 3GPP-based access technology. It was preceded by an extensive evaluation phase of possible features and techniques in the RAN workgroups that concluded that the agreed system concepts can meet most of the requirements and no significant issue was identified in terms of feasibility.

LTE will use Orthogonal Frequency Division Multiplexing (OFDM) radio technology in the downlink and Single-Carrier Frequency Division Multiple Access (SC-FDMA) for the uplink, allowing at least 100 Mbps peak data rate for downlink data rate and 50 Mbps for uplink data rate. LTE radio can operate in different frequency bands and is therefore very flexible for deployment in different regions of the world.

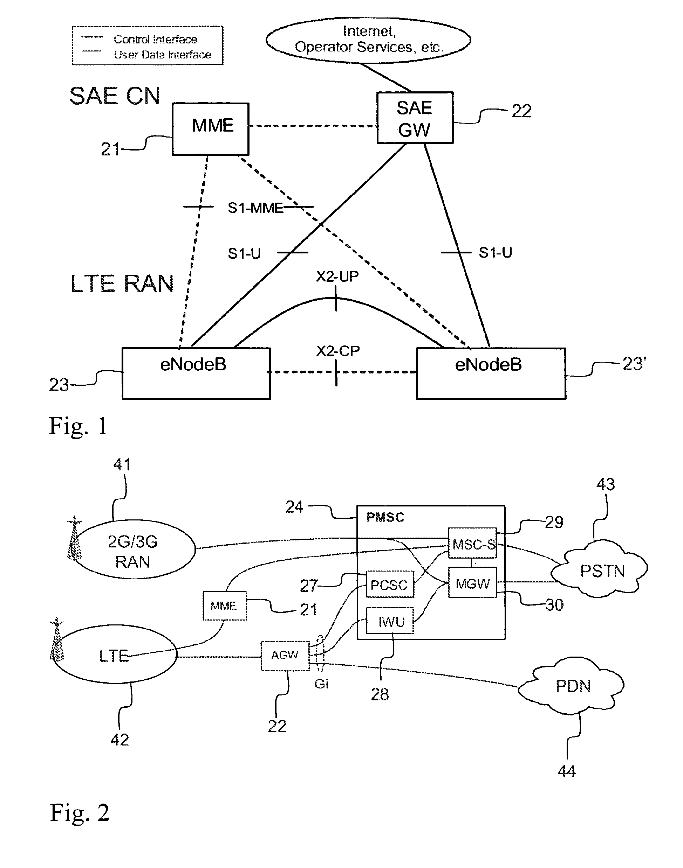

In parallel to the RAN standardization 3GPP also drives a System Architecture Evolution (SAE) work item to develop an evolved core network (CN). Fig. 1 illustrates schematically the System Architecture Evolution (SAE) and LTE interfaces. The SAE core network is made up of core nodes, which are further, split into Control Plane (Mobility Management Entity (MME) 21) and User Plane Gateway 22 (Serving Gateway and PDN Gateway) nodes. In the context of the present invention, the terms Access Gateway (AGW) and SAE GW are used to depict both the Serving Gateway and the PDN Gateway nodes and functions. In the terminology currently used AGW contains both User Plane Entity (UPE) and Inter-Access Anchor (IASA) functionality. The MME 21 is connected to the eNodeB 23, 23' via the S1-MME interface and the AGW 22 is connected to the eNodeB 23, 23' via the S1-U interface.

Common to both LTE and SAE is that only a Packet Switched (PS) domain will be specified, i.e. all services are to be supported via this domain. GSM (GPRS) and WCDMA however provide both PS and Circuit Switched (CS) access simultaneously.

Hence, if telephony services shall be deployed over LTE radio access and SAE core networks, an IMS based service engine (or similar) is needed. It has been recently investigated how to use LTE/SAE as access technology to the existing Mobile Switching Subsystem (MSS) infrastructure. The investigated solutions are called "CS over LTE/SAE", or briefly just "CS over LTE" (CSoLTE).

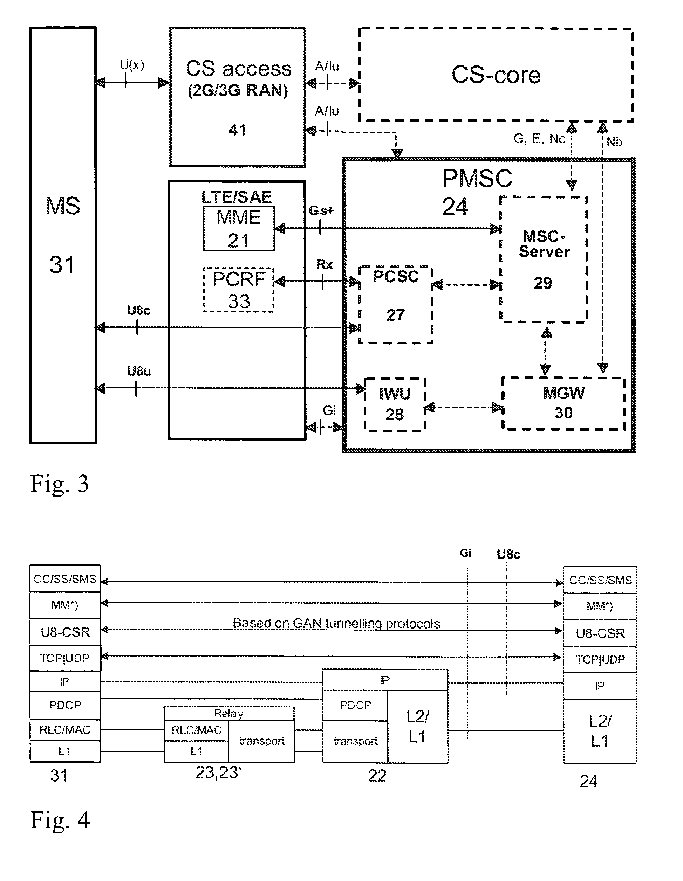

The basic CSoLTE architecture for these solutions is shown in Fig. 2. The Packet Mobile Switching Center (PMSC) 24 can be serving both traditional 2G and 3G RANs and the new CS over LTE based solutions. Packet MSC 24 contains two new logical functions called Packet CS Controller (PCSC) 27 and Interworking Unit (IWU) 28 that are further described in relation to Fig. 3.

Referring now to Fig. 3, the communication between the terminal 31 and the PMSC 24 is based on the standard Gi interface which is also called as a SGi interface in the SAE terminology. This means that all direct communication between the terminal 31 and the PCSC 27and the IWU 28 in the PMSC 24 is based on Internet Protocol (IP) and that the terminal 31 is visible and reachable using an IP-address via the Access Gateway (AGW) 22. This communication between the terminal 31 and the PMSC 24 is divided into two different interfaces, U8c for the control plane and U8u for the user plane. The U8c is terminated in the PCSC 27 and the PCSC 27 has also an Rx interface to the Policy and Charging Rule Function (PCRF) 33 for authorising of LTE/SAE bearers. The U8u is terminated in the IWU 28.

An example solution for providing CS services over the LTE radio access is called "CS Fallback" and means that the terminal is performing SAE MM procedures towards the MME 21 while camping on LTE access. The MME 21 registers the terminal in the MSC-S 29 for CS based services. When a page for CS services is received in the MSC-S 29 it is forwarded to the terminal 31 via the MME 21 and then the terminal 31 performs fallback to the 2G or 3G RANs 41. Similar behavior applies for Mobile originated CS services and when these are triggered and the terminal 31 is camping on LTE access, it will fallback to 2G or 3G RANs and trigger the initiation of the CS service there.

The CSoLTE control plane protocol architecture between the terminal 31 and the PMSC 24 (i.e. the U8c interface) is shown in Fig. 4. Interposed between the two is the eNodeB 23 and the AGW 22. This architecture is based on IP protocols (IP, TCP, UDP) and an additional tunnelling protocol named as U8-Circuit Switched Resources (U8-CSR). This protocol carries the Mobility Management (MM) and all the protocol layers above MM transparently between the terminal 31 and the PMSC 24.

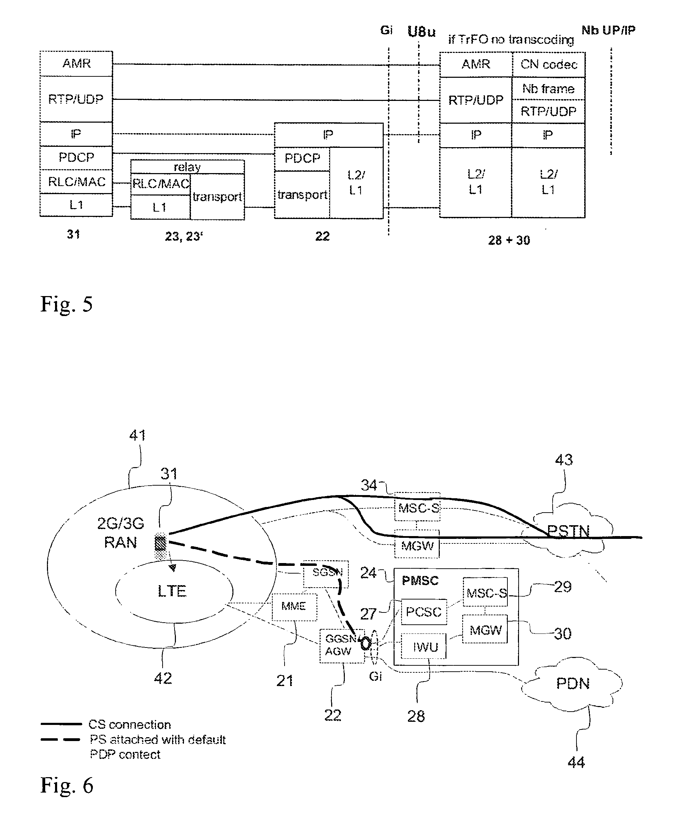

The CSoLTE user plane protocols between the terminal and the PMSC 24 (i.e. the U8u interface) are shown in Fig. 5. EnodeB 23 and AGW 22 are arranged between the two. This architecture is based on IP protocols (IP, UDP, RTP) that are used to transmit the necessary voice and data communicating (e.g. AMR coded voice) between the terminal 31 and the PMSC 24.

WO 01/31963 discloses a method of handing over a mobile terminal from a 2G Anchor Mobile Switching Centre to a GPRS in a 3G network. US 2006/0121916 discloses handoff between cellular and IP domains. WO 2005/099185 describes mobile communication with unlicensed radio access networks, and WO 2006/040673 describes a method for handing off VoIP over a wireless access network and a CDMA CS Voice session.

No known solutions exist for Handover from traditional CS domain to the CSoLTE based solutions.

It is an object of the present invention to obviate at least some of the above disadvantages and to provide a method and apparatus for triggering the seamless handover of an established connection from a circuit switched domain to circuit switched service over packet switched domain.

### Summary

According to a first aspect of the present invention, there is provided a method for initiating handover of a circuit switched service using a circuit switched bearer of a mobile station from a circuit switched to a packet switched domain in a mobile communications network. The mobile communications network comprises a radio network and a core network. The radio network comprises a controlling node. The mobile station has been being allocated an IP address and access port. The controlling node communicates to the core network a relocation/handover required message. The relocation/handover required message comprises an indication of the IP address and access port allocated to the mobile station.

According to a second aspect of the present invention, there is provided a controlling node adapted for assisting in initiating handover of a circuit switched service using a circuit switched bearer of a mobile station from a circuit switched to a packet switched domain in a mobile communications network. The mobile communications network comprises a radio network and a core network. The radio network comprises the controlling node. The mobile station has been allocated an IP address and access port. The controlling node comprises means for communicating to the core network a relocation/handover required message. The relocation/handover required message comprises an indication of the IP address and access (UDP) port allocated to the mobile station.

According to a third aspect of the present invention, there is provided a packet switching node adapted for assisting in initiating handover of a circuit switched service using a circuit switched bearer of a mobile station from a circuit switched to a packet switched domain in a mobile communications network. The mobile communications network comprises a radio network and a core network. The radio network comprises a controlling node. The mobile station has been allocated an IP address and access port. The packet switching node comprises means for receiving from the controlling node a relocation/handover required message. The relocation/handover required message comprises an indication of the IP address and access port allocated to the mobile station.

The terminals engaged in CS calls may be moved to the LTE/SAE access. This means that the terminals can start using the LTE/SAE broadband access when moving to LTE coverage area even in the case the CS services were initiated in 2G/3G RAN.

Moreover, no changes are needed to the existing CS CN infrastructure (i.e. the other MSCs other than the PMSC).

### Brief Description of the Drawings

Fig. 1 illustrates schematically SAE and LTE interfaces.
Fig. 2 illustrates schematically a CSoLTE architecture.
Fig. 3 illustrates schematically a CSoLTE reference architecture.
Fig. 4 illustrates schematically the CSoLTE control plane protocol architecture.
Fig. 5 illustrates schematically the CSoLTE user plane protocol architecture.
Fig. 6 illustrates schematically the Handover from CS to CSoLTE before execution - option 1.
Fig. 7 illustrates schematically the handover from CS to CSoLTE after execution - option 1.
Fig. 8 illustrates schematically the Handover from CS to CSoLTE before execution - option 2 .
Fig. 9 illustrates schematically the Handover from CS to CSoLTE after Execution - option 2.
Fig. 10 is a Sequence Diagram for Handover from UTRAN CS to CSoLTE - option 1.
Fig. 11. is a Sequence Diagram for Handover from UTRAN CS to CSoLTE - option 2.
Fig. 12 is a Sequence Diagram for Handover from GERAN CS to CSoLTE.

### Detailed Description

The present invention relates to Handover from the traditional CS domain (i.e. a 2G and/or a 3G RAN) to the CSoLTE based solutions. It applies for the case when a terminal in CS dedicated state moves from the 2G/3G RAN to an area where LTE coverage exists and when it is preferred that the call is handed over to the LTE/SAE networks.

This also means that the present invention may be applied for the CSoLTE-1 and CSoLTE-D solutions as these solutions contain the usage of CSoLTE principles to transfer user plane and CS signalling connections.

The basic concept of the invention is that the Handover from traditional CS domain to CSoLTE is triggered from the 2G/3G RAN. This handover consists of two parallel handover requests, one request similar to the existing CS Handover request and the second one similar to the existing PS handover request. The CS Handover request is also expanded with mechanisms to communicate the needed terminal and PMSC IP-address information.

The situation that the present invention addresses is the following:

The terminal is initially:
1. in CS dedicated state with reserved CS resources in the 2G/3G RAN and between the CS CN and 2G/3G RAN,
2. GPRS/PS domain attached via the current 2G/3G RAN, and
3. has a default Packet Data Protocol (PDP) context so that the terminal holds an IP-address in the GGSN/AGW.

Fig. 6 illustrates schematically the Handover from CS to CSoLTE: before execution under option 1.

Notel : the CS domain may consist of MSC-S and MGW or may alternatively consist of classical MSC/VLR nodes. This is of no relevance for the present invention.

Note2: The word "option" is used in this document to describe different deployment alternatives and options.

### Option 1:

The first option assumes that the serving MSC 34 does not have the capability to act as a PMSC, i.e. does not have access to LTE/SAE network. This may be the case in the early introduction of LTE/SAE, but it can be assumed that at a later deployment phase all existing MSC will have also PMSC capability.

The following actions need to take place when handover from traditional CS domain (i.e. 2G/3G RAN) takes place to a CSoLTE solution:
1. The path in the CN between MSC 34 and PMSC 24 needs to be established. The current MSC 34 will act as an anchor point at this handover. For this action the target LTE cell needs to be identified either as GERAN or UTRAN cell to avoid changes in the existing MSCs serving 2G/3G RANs.
2. The LTE/SAE bearers needed for CSoLTE need to be established for this terminal.
3. The PMSC 24 and the terminal 31 need to become aware of the IP-addresses and UDP-ports used for the control plane communication.
4. The PMSC 24 and the terminal 31 need to become aware of the IP-addresses and UDP-ports used for the user plane communication.

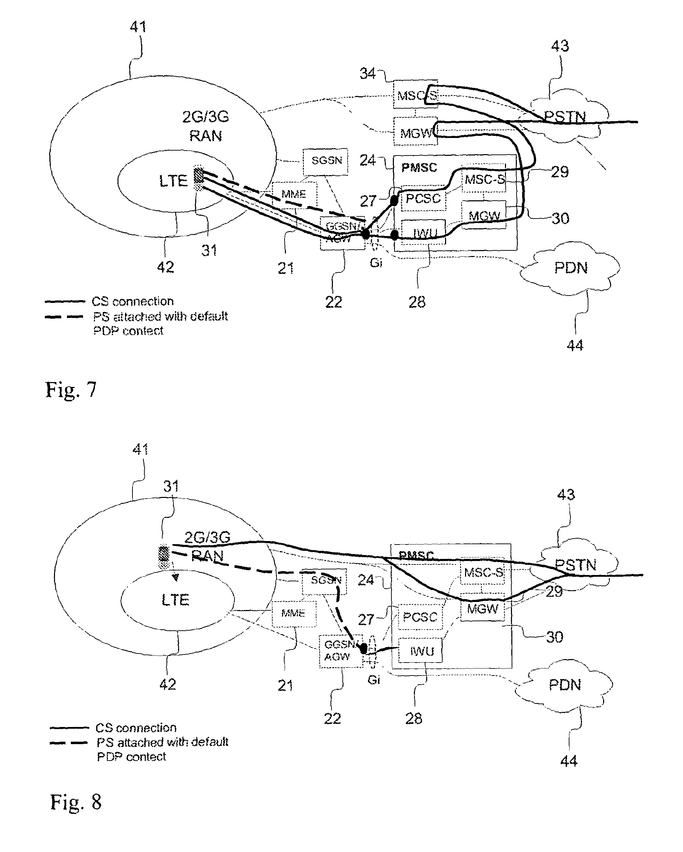

Fig. 7 illustrates schematically the handover from CS to CSoLTE after execution under option 1

### Option 2:

In the second option, the serving MSC is also capable of functioning as a PMSC.

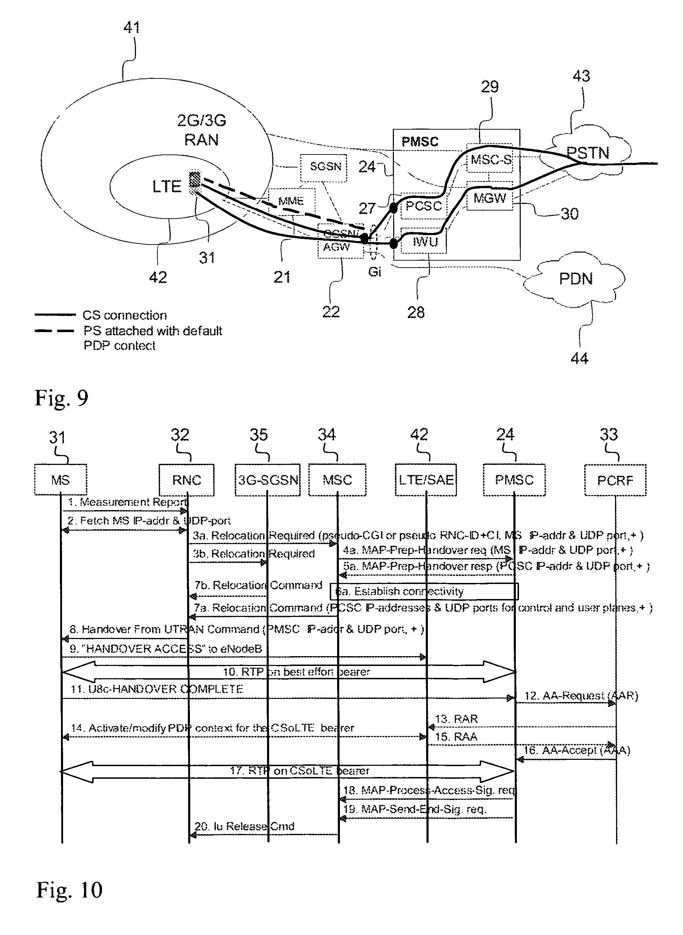

In this case, instead of handling the handover to LTE/SAE as an inter-MSC handover case, this can be handled as intra-MSC, inter-system handover. This is also possible today between GSM and WCDMA RANs. The handover procedures are very similar to option 1, the only difference being that no non-anchor MSC is needed and therefore also no user plane connection between MSCs. The option 2 is further shown in figures 8 and 9.

Fig. 8 illustrates schematically the handover from CS to CSoLTE: before execution under option 2.

Fig. 9 illustrates schematically the handover from CS to CSoLTE: after execution under option 2.

### The procedure for Handover from UTRAN CS to CSoLTE

Fig. 10 shows the relevant steps that are needed when a terminal occupied in a CS call is moving from 3G RAN to CSoLTE for the option 1 case when the PMSC 24 is not the serving MSC.

Initial State: The MS is engaged in a CS call in an UTRAN/WCDMA cell. The mobile station31 is configured to perform measurements of neighbouring cells and at least one of the cells to be measured is a LTE cell. The MOBILE STATION 31 moves to the coverage area of the LTE cell and detects that cell.

Step 1: The mobile station 31 reports the measurements it has performed for the detected LTE cell. The exact details of this are not standardized yet, but it can be assumed that the LTE cells are measured and reported as IRAT-cells.

Step 2: In this step the RNC retrieves the IP-address of the mobile station31 and also an UDP port to be used for the CSoLTE user plane. This is an optional step and enables that the PMSC may start sending downlink packets to the terminal already after the CS Handover procedure.

Another possibility would be that the PMSC 24 waits for the first uplink user payload packet from the terminal in step 10 and so learns the IP-address and UDP-port used by the mobile station31 and enables the downlink direction first after this.

Step 3: The RNC decides to perform Handover to the CSoLTE solution. This decision is based on the knowledge of the CS bearer/RAB being allocated for the mobile station 31 and that the reported target cell is a LTE cell. The following description is divided to two different parts, the CS handover and PS handover parts that are both triggered for the Handover from CS to CSoLTE procedure. The CS handover is shown as Steps 3a-7a and the PS handover is partly shown as steps 3b-7b.

Steps 3b-7b: The RNC triggers the PS handover procedure. As this procedure is performed as normally, the steps between steps 3b and 7b are not described. At step 7b, the RNC waits for the completion of both CS and PS handover procedures until it continues to step 8.

Step 3a: The RNC triggers the CS Handover procedure by sending the (RANAP) Relocation Required message to the MSC. As mentioned earlier, the target LTE-cell is also associated with either an UTRAN or a GERAN cell. This cell information (e.g. CGI for GERAN cells or RNC-ID and Cl for UTRAN cells) is used as the target cell in the handover request and so decides which PMSC is to handle the CSoLTE service for the specified LTE-cell. The reason for using GERAN and/or UTRAN cell information for this purpose is to avoid any unnecessary changes in the source MSC for this handover case.

If the optional step 2 above was performed, then the RNC includes the mobile station 31 IP-address and UDP-port information in the transparent information elements that are normally transported between the source BSC/RNC and the target BSC/RNC. If the target cell is identified as an UTRAN cell, then the Source RNC To Target RNC Transparent Container IE can be used and if the target cell is identified as GERAN cell, then the Old BSS To New BSS Information IE can be used to send transparently information from the source RNC to the PMSC 24 through the source MSC in the CS handover preparation request.

Step 4a: The MSC uses the target cell identifier received in the Relocation Required message to identify the target MSC for this handover request. In this case, the analysis points to the PMSC 24 and the relevant MAP signalling (MAP-Prep-Handover-Request) is triggered towards the PMSC. The transparent container (e.g. Source RNC To Target RNC Transparent Container IE) is included in the MAP signalling and if the mobile station 31 IP-address and UPD-port were retrieved in step 2, then this is the mechanism to pass that information to the PMSC 24.

Step 5a: The PMSC 24 reserves the needed resources for the CSoLTE call. This means that an IP-termination with an IP-address and UDP-port are reserved for the user plane. In the same way, an IP-termination with an IP-address and UDP-port may be reserved for the control plane. Then MAP signalling is used to communicate towards the source MSC (MAP-Prep-Handover-Response) and the IP-addresses and UDP ports received for the CSoLTE call can be included in the Target RNC To Source RNC Transparent Container IE.

Step 6a: In this step the needed connectivity is established between the MSC and the PMSC 24 using standard CS call control signalling.

Step 7a: The MSC returns the (RANAP) Relocation Command to the RNC as an indication that the CS handover is prepared and that the RNC can command the terminal to move to the target cell. As this specif handover is about handover to LTE and CSoLTE, the RNC needs to wait for both the steps 7a and 7b to happen before it can command the mobile station 31 to move to the target LTE cell.

Step 8a: The RNC builds a Handover from UTRAN Command message and sends this message to the terminal. This message contains some specific information for the CSoLTE handover case as it is a combination of the information retrieved as part of the performed PS and CS handover preparations. First, the radio level information for the target LTE cell was received as part of the PS handover. Secondly, the needed PMSC address information is also included in the message.

Step 9: The mobile station 31 accesses the target LTE cell using the mechanisms specified for normal PS handover. Note that the PS handover mechanism is still under standardisation.

Step 10: The mobile station 31 and the PMSC 24 may communicate using the default best effort LTE/SAE bearers established as part of the PS handover scenario. The mobile station 31 knows the user plane IP-address and UDP-port for the reserved IP termination in the IWU/MGW and starts sending uplink user plane packets towards this termination. In parallel, the mobile station 31 establishes the control plane connection towards the PMSC 24 and the IP/UDP address/port information needed for this was also signalled to the mobile station 31 in step 8.

Depending on whether step 2 was performed, the PMSC 24 may start sending downlink user plane packets towards the mobile station 31 already after step 4a. If step 2 was not performed, then the PMSC 24 will wait for the first uplink user plane packet from the mobile station 31 on the reserved IP-termination and then use the source IP-address and UDP-ports from these uplink packets as the destination IP-address and UDP-port for the downlink user plane packets.

Step 11: The mobile station 31 signals to the PMSC 24 that the handover from CS to CSoLTE was successful by sending the U8c-HANDOVER COMPLETE message.

Step 12: Based on either step 10 (receiving of uplink user plane traffic from the mobile station 31) or step 11 the PMSC 24 now knows that the mobile station 31 has arrived in the new cell. The PMSC 24 triggers the authorization and creation of the needed dedicated LTE/SAE bearer for the CSoLTE application by sending the AA-Request (AAR) to the Policy and Charging Rules Function (PCRF) over the Rx-interface.

Step 13: The PCRF accepts the requested bearer and signals the need to create the dedicated LTE/SAE bearer for the CSoLTE by sending the Re-Auth-Request (RAR) message to the SAE-GW.

Step 14: Standard signalling is performed between the SAE/LTE and the mobile station 31 to activate the dedicated LTE/SAE bearer for the CSoLTE.

Step 15: The SAE-GW sends the Re-Auth-Accept (RAA) message to the PCRF to indicate that the bearer has been established.

Step 16: The PCRF sends the AA-Accept (AAA) message to the PMSC 24 to indicate that the bearer has been established.

Step 17: The CSoLTE call is using optimised LTE/SAE bearers.

Steps 18-20: The PMSC 24 indicates the handover completion to the source MSC which requests the RNC to release the previously used resources in the source cell. All performed steps are not shown in figure 8, as these are the normal procedures performed after handover.

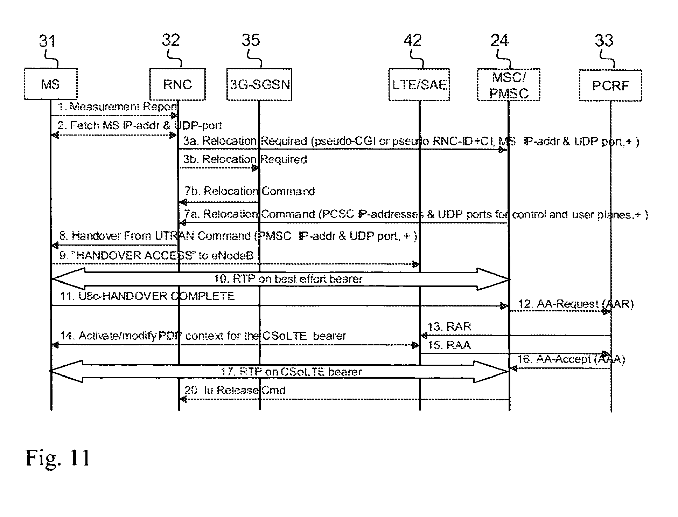

Fig. 11 is a Sequence Diagram for Handover from UTRAN CS to CSoLTE - option 2 It ' shows the relevant steps that are needed when a terminal occupied in a CS call is moving from 3G RAN to CSoLTE for the option 2 case when the serving MSC is also functioning as the PMSC. The description of the figure 10 applies here also expect that the steps 4-6 and 18-19 are omitted.

### The procedure for Handover from GSM CS to CSoLTE

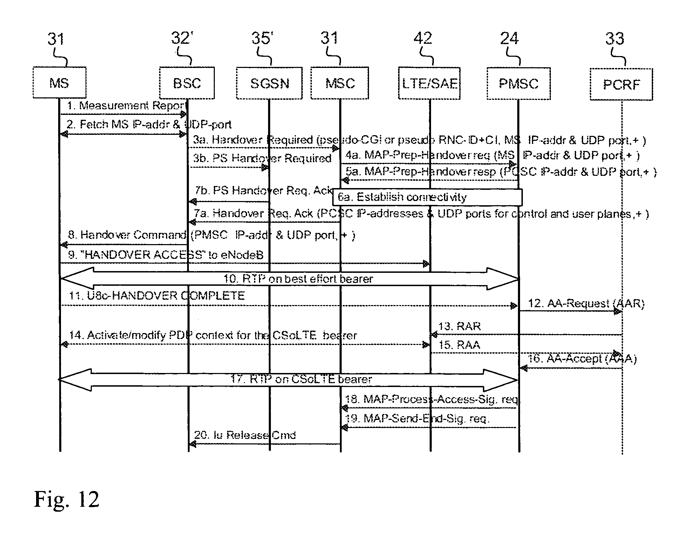

Fig. 12 is a Sequence Diagram for Handover from GERAN CS to CSoLTE showing the relevant steps that are needed when a terminal occupied in a CS call is moving from GERAN to CSoLTE.

Initial State: The mobile station 31 is engaged in a CS call in an GERAN/GSM cell. The mobile station 31 is configured to perform measurements of neighbouring cells and at least one of the cells to be measured is a LTE cell. The mobile station 31 moves to the coverage area of the LTE cell and detects that cell.

Step 1: The mobile station 31 reports the measurements it has performed for the detected LTE cell. The exact details of this are not standardized yet, but it can be assumed that the LTE cells are measured and reported as IRAT-cells.

Step 2: In this step the BSC retrieves the IP-address of the mobile station 31 and also an UDP port to be used for the CSoLTE user plane. This is an optional step and enables that the PMSC 24 may start sending downlink packets to the terminal already after the CS Handover procedure.

Another possibility would be that the PMSC 24 waits for the first uplink user payload packet from the terminal in step 10 and so learns the IP-address and UDP-port used by the mobile station 31 and enables the downlink direction first after this.

Step 3: The BSC decides to perform Handover to the CSoLTE solution. This decision is based on the knowledge of the CS bearer being allocated for the mobile station 31 and that the reported target cell is a LTE cell. The following description is divided to two different parts, the CS handover and PS handover parts that are both triggered for the Handover from CS to CSoLTE procedure. The CS handover is shown as Steps 3a-7a and the PS handover is partly shown as steps 3b-7b.

Steps 3b-7b: The BSC 32' triggers the PS handover procedure. As this procedure is performed, as normally, the steps between steps 3b and 7b are not described. The only difference towards normal PS handover procedures is that if DTM was not supported by the mobile station 31 or in the current cell, then there might be a need for an extra indication in step 3b from the BSC to the SGSN to indicate that also non-active PDP contexts need to be transferred towards the target RAT (i.e. the MME and UPE and eNodeB and AGW). At step 7b, the BSC waits for the completion of both CS and PS handover procedures until it continues to step 8.

Step 3a: The BSC triggers the CS Handover procedure by sending the (BSSMAP) Handover Required message to the MSC. As mentioned earlier, the target LTE-cell is also associated with either an UTRAN or a GERAN cell. This cell information (e.g. CGI for GERAN cells or RNC-ID and CI for UTRAN cells) is used as the target cell in the handover request and so decides which PMSC is to handle the CSoLTE service for the specified LTE-cell. The reason for using GERAN and/or UTRAN cell information for this purpose is to avoid any unnecessary changes in the source MSC for this handover case.

If the optional step 2 above was performed, then the BSC includes the mobile station 31 IP-address and UDP-port information in the transparent information elements that are normally transported between the source BSC/RNC and the target BSC/RNC. If the target cell is identified as an UTRAN cell, then the Source RNC To Target RNC Transparent Container IE can be used and if the target cell is identified as GERAN cell, then the Old BSS To New BSS Information IE can be used to send transparently information from the source BSC to the PMSC 24 through the source MSC in the CS handover preparation request.

Step 4a: The MSC uses the target cell identifier received in the Handover Required message to identify the target MSC for this handover request. In this case, the analysis points to the PMSC 24 and the relevant MAP signalling (MAP-Prep-Handover-Request) is triggered towards the PMSC 24. The transparent container (e.g. Source RNC To Target RNC Transparent Container IE) is included in the MAP signalling and if the mobile station 31 IP-address and UPD-port were retrieved in step 2, then this is the mechanism to pass that information to the PMSC 24.

Step 5a: The PMSC 24 reserves the needed resources for the CSoLTE call. This means that an IP-termination with an IP-address and UDP-port are reserved for the user plane. In the same way, an IP-temination with an IP-address and UDP-port may be reserved for the control plane. Then MAP signalling is used to communicate towards the MSC (MAP-Prep-Handover-Response) and the IP-addresses and UDP ports received for the CSoLTE call can be included in the Target RNC To Source RNC Transparent Container IE.

Step 6a: In this step the needed connectivity is established between the MSC and the PMSC 24 using standard CS call control signalling.

Step 7a: The MSC returns the (BSSMAP) Handover Required Acknowledge message to the BSC as an indication that the CS handover is prepared and that the BSC can command the terminal to move to the target cell. As this specific handover is about handover to LTE and CSoLTE, the BSC needs to wait for both the steps 7a and 7b to happen before it can command the mobile station 31 to move to the target LTE cell.

Step 8a: The BSC builds a Handover Command message and sends this message to the terminal. This message contains some specific information for the CSoLTE handover case as it is a combination of the information retrieved as part of the performed PS and CS handover preparations. First, the radio level information for the target LTE cell was received as part of the PS handover. Secondly, the needed PMSC address information is also included in the message.

Step 9: The mobile station 31 accesses the target LTE cell using the mechanisms specified for normal PS handover. Note that the PS handover mechanism is still under standardisation.

Step 10: The mobile station 31 and the PMSC 24 may communicate using the default best effort LTE/SAE bearers established as part of the PS handover scenario. The mobile station 31 knows the user plane IP-address and UDP-port for the reserved IP termination in the IWU/MGW and starts sending uplink user plane packets towards this germination. In parallel, the mobile station 31 establishes the control plane connection towards the PMSC 24 and the IP/UDP address/port information needed for this was also signalled to the mobile station 31 in step 8.

Depending on if the step 2 was performed, the PMSC 24 may start sending downlink user plane packets towards the mobile station 31 already after step 4a. If step 2 was not performed, then the PMSC 24 will wait for the first uplink user plane packet from the mobile station 31 on the reserved IP-termination and then use the source IP-address and UDP-ports from these uplink packets as the destination IP-address and UDP-port for the downlink user plane packets.

Step 11: The mobile station 31 signals to the PMSC 24 that the handover from CS to CSoLTE was successful by sending the U8c-HANDOVER COMPLETE message.

Step 12: Based on either step 10 (receiving of uplink user plane traffic from the mobile station 31) or step 11 the PMSC 24 now knows that the mobile station 31 has arrived in the new cell. The PMSC 24 triggers the authorization and creation of the needed dedicated LTE/SAE bearer for the CSoLTE application by sending the AA-Request (AAR) to the Policy and Charging Rules Function (PCRF) over the Rx-interface.

Step 13: The PCRF accepts the requested bearer and signals the need to create the dedicated LTE/SAE bearer for the CSoLTE by sending the Re-Auth-Request (RAR) message to the SAE-GW.

Step 14: Standard signalling is performed, between the SAE/LTE and the mobile station 31 to activate the dedicated LTE/SAE bearer for the CSoLTE.

Step 15: The SAE-GW sends the Re-Auth-Accept (RAA) message to the PCRF to indicate that the bearer has been established.

Step 16: The PCRF sends the AA-Accept (AAA) message to the PMSC 24 to indicate that the bearer has been established.

Step 17: The CSoLTE call is using optimised LTE/SAE bearers.

Steps 18-26: The PMSC 24 indicates the handover completion to the source MSC which requests the BSC to release the previously used resources in the source cell. All performed steps are not shown in figure 8 as these are the normal procedures performed after handover.

Similar steps are needed when a terminal occupied in a CS call is moving from GSM to CSoLTE for the option 2 case when the serving MSC is also functioning as the PMSC. The description of the Fig. 12 applies for that case also expect that the steps 4a-5a and 18-19 are omitted.

No doubt many other effective alternatives will occur to the skilled person. It will be understood that the invention is not limited to the described embodiments and encompasses modifications apparent to those skilled in the art lying within the scope of the claims appended hereto.

## Claims

1. A method for initiating handover of a circuit switched service using a circuit switched bearer of a mobile station (31) from a circuit switched to a packet switched domain in a mobile communications network, the mobile communications network comprising a radio network (41) and a core network (42), the radio network comprising a controlling node (32), the mobile station (31) being allocated an IP address and access port, said method **characterized by**:
the controlling node (32) communicating to the core network a relocation/handover required message; said relocation/handover required message comprising an indication of the IP address and access port allocated to the mobile station (31).

2. The method according to claim 1, further comprising the controlling node (32) requesting from the mobile station (31) an indication of its IP address and access port.

3. The method according to claim 1 or 2, wherein the controlling node (32) is selected from one of a radio network controller, in which case the relocation/handover required message is a relocation required message, and a base station controller, in which case the relocation/handover required message is a handover required message.

4. The method according to any of the preceding claims, wherein the radio network (41) further comprises a packet switching node, the method further comprising
the controlling node (32) communicating to the packet switching node (24) a relocation/handover required message; said relocation/handover required message comprising an indication of the IP address and access port allocated to the mobile station.

5. The method according to claim 4, wherein the relocation/handover required message from the controlling node (32) is passed to the packet switching node (24) via the presently used switching node.

6. The method according to any one of claims 4 or 5, wherein upon reception of the relocation/handover request the packet switching node (24) reserves a local IP address and/or access port and communicates these to the controlling node (32).

7. The method according to claim 6, wherein the controlling node (32) forwards the IP address and access port received to the mobile station (31) for use by the mobile station (31) in communication with the packet switching node (24), wherein either the packet switching node (24) determines completion of handover from uplink packets sent by the mobile station, or wherein upon completion of handover, the mobile station (31) sends a handover completed message to the packet switching node (24).

8. The method according to claim 7, wherein the packet switching node (24) triggers the activation of the required packet switched bearer.

9. A controlling node (32) adapted for assisting in initiating handover of a circuit switched service using a circuit switched bearer of a mobile station (31) from a circuit switched to a packet switched domain in a mobile communications network, the mobile communications network comprising a radio network and a core network, the radio network comprising the controlling node, the mobile station being allocated an IP address and access port, the controlling node **characterized by**:
means for communicating to the core network a relocation/handover required message; said relocation/handover required message comprising an indication of the IP address and access port allocated to the mobile station (31).

10. The controlling node (32) according to claim 9, further comprising means for requesting from the mobile station (31) an indication of its IP address and access port.

11. The controlling node (32) according to claim 9 or 10, wherein the controlling node is selected from one of a radio network controller, in which case the relocation/handover required message is a relocation required message, and a base station controller, in which case the relocation/handover required message is a handover required message.

12. A packet switching node (24) adapted for assisting in initiating handover of a circuit switched service using a circuit switched bearer of a mobile station (31) from a circuit switched to a packet switched domain in a mobile communications network, the mobile communications network comprising a radio network and a core network, the radio network comprising a controlling node (32), the mobile station (31) being allocated an IP address and access port, the packet switching node (24) **characterized by**:
means for receiving from the controlling node (32) a relocation/handover required message; said relocation/handover required message comprising an indication of the IP address and access port allocated to the mobile station (31).

13. The packet switching node (24) according to claim 12, wherein the packet switching node (24) comprises means for reserving a local IP address and/or UDP port upon reception of the relocation/handover request, and comprising means for communicating these to the controlling node (32).

14. The packet switching node (24) according to claim 12 or 13, wherein the packet switching node (24) further comprises means for determining completion of handover from uplink packets sent by the mobile station (31).

15. The packet switching node (24) according to any one of claims 12 to 14, wherein the packet switching node (24) further comprises means for triggering the activation of the required packet switched bearer.

## Patentansprüche

1. Verfahren zum Initiieren von Handover eines leitungsvermittelten Dienstes unter Verwendung eines leitungsvermittelten Trägers einer Mobilstation (31) von einer leitungsvermittelten zu einer paketvermittelten Domäne in einem Mobilkommunikationsnetz, wobei das Mobilkommunikationsnetz ein Funknetz (41) und ein Kernnetz (42) umfasst und das Funknetz einen Steuerknoten (32) umfasst, wobei der Mobilstation (31) eine IP-Adresse und ein Zugangsport zugewiesen werden, wobei das Verfahren **dadurch gekennzeichnet ist, dass**:
der Steuerknoten (32) eine Relokalisierungs-/Handover-Bedarfsnachricht an das Kernnetz kommuniziert; wobei die Relokalisierungs-/Handover-Bedarfsnachricht eine Angabe der IP-Adresse und des Zugangsports umfasst, die der Mobilstation (31) zugewiesen sind.

2. Verfahren nach Anspruch 1, außerdem umfassend, dass der Steuerknoten (32) von der Mobilstation (31) eine Angabe ihrer IP-Adresse und ihres Zugangsports anfordert.

3. Verfahren nach Anspruch 1 oder 2, worin der Steuerknoten (32) aus einem von Folgenden ausgewählt wird: einer Funknetzsteuerung, in welchem Falle die Relokalisierungs-/Handover-Bedarfsnachricht eine Relokalisierungs-Bedarfsnachricht ist, und einer Basisstationssteuerung, in welchem Falle die Relokalisierungs-/Handover-Bedarfsnachricht eine Handover-Bedarfsnachricht ist.

4. Verfahren nach einem der vorhergehenden Ansprüche, worin das Funknetz (41) außerdem einen Paketvermittlungsknoten umfasst, wobei das Verfahren außerdem umfasst, dass
der Steuerknoten (32) eine Relokalisierungs-/Handover-Bedarfsnachricht an den Paketvermittlungsknoten (24) kommuniziert; wobei die Relokalisierungs-/Handover-Bedarfsnachricht eine Angabe der IP-Adresse und des Zugangsports umfasst, die der Mobilstation zugewiesen sind.

5. Verfahren nach Anspruch 4, worin die Relokalisierungs-/Handover-Bedarfsnachricht vom Steuerknoten (32) über den gegenwärtig benutzten Vermittlungsknoten an den Paketvermittlungsknoten (24) weitergeleitet wird.

6. Verfahren nach Anspruch 4 oder 5, worin der Paketvermittlungsknoten (24) nach Empfang der Relokalisierungs-/Handover-Anforderung eine lokale IP-Adresse und/oder einen Zugangsport reserviert und diese an den Steuerknoten (32) kommuniziert.

7. Verfahren nach Anspruch 6, worin der Steuerknoten (32) die empfangene IP-Adresse und den Zugangsport an die Mobilstation (31) weiterleitet zur Verwendung durch die mit dem Paketvermittlungsknoten (24) in Kommunikation stehende Mobilstation (31), worin entweder der Paketvermittlungsknoten (24) die Fertigstellung des Handovers aus von der Mobilstation gesendeten Uplink-Paketen bestimmt oder worin die Mobilstation (31) nach Fertigstellung des Handovers eine Handover-Fertigstellungsnachricht an den Paketvermittlungsknoten (24) sendet.

8. Verfahren nach Anspruch 7, worin der Paketvermittlungsknoten (24) die Aktivierung des erforderlichen paketvermittelten Trägers triggert.

9. Steuerknoten (32), angepasst zum Unterstützen beim Initiieren von Handover eines leitungsvermittelten Dienstes unter Verwendung eines leitungsvermittelten Trägers einer Mobilstation (31) von einer leitungsvermittelten zu einer paketvermittelten Domäne in einem Mobilkommunikationsnetz, wobei das Mobilkommunikationsnetz ein Funknetz und ein Kernnetz umfasst und das Funknetz den Steuerknoten umfasst, wobei der Mobilstation eine IP-Adresse und ein Zugangsport zugewiesen werden, wobei der Steuerknoten **gekennzeichnet ist durch**:
Mittel zum Kommunizieren einer Relokalisierungs-/Handover-Bedarfsnachricht an das Kernnetz; wobei die Relokalisierungs-/Handover-Bedarfsnachricht eine Angabe der IP-Adresse und des Zugangsports umfasst, die der Mobilstation (31) zugewiesen sind.

10. Steuerknoten (32) nach Anspruch 9, außerdem Mittel umfassend, um von der Mobilstation (31) eine Angabe ihrer IP-Adresse und ihres Zugangsports anzufordern.

11. Steuerknoten (32) nach Anspruch 9 oder 10, worin der Steuerknoten aus einem von Folgenden ausgewählt wird: einer Funknetzsteuerung, in welchem Falle die Relokalisierungs-/Handover-Bedarfsnachricht eine Relokalisierungs-Bedarfsnachricht ist, und einer Basisstationssteuerung, in welchem Falle die Relokalisierungs-/Handover-Bedarfsnachricht eine Handover-Bedarfsnachricht ist.

12. Paketvermittlungsknoten (24), angepasst zum Unterstützen beim Initiieren von Handover eines leitungsvermittelten Dienstes unter Verwendung eines leitungsvermittelten Trägers einer Mobilstation (31) von einer leitungsvermittelten zu einer paketvermittelten Domäne in einem Mobilkommunikationsnetz, wobei das Mobilkommunikationsnetz ein Funknetz und ein Kernnetz umfasst und das Funknetz einen Steuerknoten (32) umfasst, wobei der Mobilstation (31) eine IP-Adresse und ein Zugangsport zugewiesen werden, wobei der Paketvermittlungsknoten (24) **gekennzeichnet ist durch**:
Mittel zum Empfangen einer Relokalisierungs-/Handover-Bedarfsnachricht vom Steuerknoten (32); wobei die Relokalisierungs-/Handover-Bedarfsnachricht eine Angabe der IP-Adresse und des Zugangsports umfasst, die der Mobilstation (31) zugewiesen sind.

13. Paketvermittlungsknoten (24) nach Anspruch 12, worin der Paketvermittlungsknoten (24) Mittel umfasst, um eine lokale IP-Adresse und/oder einen UDP-Port nach Empfang der Relokalisierungs-/Handover-Anforderung zu reservieren, und Mittel umfasst, um diese an den Steuerknoten (32) zu kommunizieren.

14. Paketvermittlungsknoten (24) nach Anspruch 12 oder 13, worin der Paketvermittlungsknoten (24) außerdem Mittel umfasst, um die Fertigstellung des Handovers aus von der Mobilstation (31) gesendeten Uplink-Paketen zu bestimmen.

15. Paketvermittlungsknoten (24) nach einem der Ansprüche 12 bis 14, worin der Paketvermittlungsknoten (24) außerdem Mittel umfasst, um die Aktivierung des erforderlichen paketvermittelten Trägers zu triggern.

## Revendications

1. Procédé destiné à initier un transfert intercellulaire d'un service à commutation de circuits faisant appel à une porteuse à commutation de circuits d'une station mobile (31), d'un domaine à commutation de circuits à un domaine à commutation de paquets dans un réseau de communication mobile, le réseau de communication mobile comportant un réseau radio (41) et un réseau fédérateur (42), le réseau radio comportant un noeud de commande (32), la station mobile (31) recevant une adresse IP et un port d'accès, ledit procédé étant **caractérisé en ce que** :
le noeud de commande (32) communique au réseau fédérateur un message de relocalisation/transfert intercellulaire requis ; ledit message de relocalisation/transfert intercellulaire requis comportant une indication de l'adresse IP et du port d'accès affectés à la station mobile (31).

2. Procédé selon la revendication 1, comportant en outre une étape dans laquelle le noeud de commande (32) demande à la station mobile (31) une indication de son adresse IP et de son port d'accès.

3. Procédé selon la revendication 1 ou 2, dans lequel le noeud de commande (32) est choisi parmi les éléments suivants : un contrôleur de réseau radio, auquel cas le message de relocalisation/transfert intercellulaire requis est un message de relocalisation requise, et, un contrôleur de station de base, auquel cas le message de relocalisation/transfert intercellulaire requis est un message de transfert intercellulaire requis.

4. Procédé selon l'une quelconque des revendications précédentes, dans lequel le réseau radio (41) comprend en outre un noeud à commutation de paquets, le procédé étant en outre **caractérisé en ce que** :
le noeud de commande (32) communique au noeud à commutation de paquets (24) un message de relocalisation/transfert intercellulaire requis ; ledit message de relocalisation/transfert intercellulaire requis comportant une indication de l'adresse IP et du port d'accès affectés à la station mobile.

5. Procédé selon la revendication 4, dans lequel le message de relocalisation/transfert intercellulaire requis en provenance du noeud de commande (32) est communiqué au noeud à commutation de paquets (24) via le noeud à commutation utilisé à cet instant.

6. Procédé selon l'une quelconque des revendications 4 ou 5, dans lequel lors de la réception de la demande de transfert intercellulaire/relocalisation, le noeud à commutation de paquets (24) réserve une adresse IP locale et/ou un port d'accès local et communique ce ou ces éléments au noeud de commande (32).

7. Procédé selon la revendication 6, dans lequel le noeud de commande (32) achemine l'adresse IP et le port d'accès reçus à la station mobile (31) en vue d'une utilisation par la station mobile (31) dans la communication avec le noeud à commutation de paquets (24), dans lequel le noeud à commutation de paquets (24) détermine l'achèvement du transfert intercellulaire à partir de paquets en liaison montante envoyés par la station mobile, ou dans lequel, suite au transfert intercellulaire, la station mobile (31) envoie un message de transfert intercellulaire achevé au noeud à commutation de paquets (24).

8. Procédé selon la revendication 7, dans lequel le noeud à commutation de paquets (24) déclenche l'activation de la porteuse à commutation de paquets requise.

9. Noeud de commande (32) apte à contribuer à l'initialisation d'un transfert intercellulaire d'un service à commutation de circuits faisant appel à une porteuse à commutation de circuits d'une station mobile (31), d'un domaine à commutation de circuits à un domaine à commutation de paquets dans un réseau de communication mobile, le réseau de communication mobile comportant un réseau radio et un réseau fédérateur, le réseau radio comportant le noeud de commande, la station mobile recevant une adresse IP et un port d'accès, le noeud de commande étant **caractérisé par** :
un moyen pour communiquer au réseau fédérateur un message de relocalisation/transfert intercellulaire requis ; ledit message de relocalisation/transfert intercellulaire requis comportant une indication de l'adresse IP et du port d'accès affectés à la station mobile (31).

10. Noeud de commande (32) selon la revendication 9, comportant en outre un moyen pour demander à la station mobile (31) une indication de son adresse IP et de son port d'accès.

11. Noeud de commande (32) selon la revendication 9 ou 10, dans lequel le noeud de commande est choisi parmi les éléments suivants : un contrôleur de réseau radio, auquel cas le message de relocalisation/transfert intercellulaire requis est un message de relocalisation requise, et, un contrôleur de station de base, auquel cas le message de relocalisation/transfert intercellulaire requis est un message de transfert intercellulaire requis.

12. Noeud à commutation de paquets (24) apte à contribuer à l'initialisation d'un transfert intercellulaire d'un service à commutation de circuits faisant appel à une porteuse à commutation de circuits d'une station mobile (31), d'un domaine à commutation de circuits à un domaine à commutation de paquets dans un réseau de communication mobile, le réseau de communication mobile comportant un réseau radio et un réseau fédérateur, le réseau radio comportant un noeud de commande (32), la station mobile (31) recevant une adresse IP et un port d'accès, le noeud à commutation de paquets (24) étant **caractérisé par** :
un moyen pour recevoir, en provenance du noeud de commande (32), un message de relocalisation/transfert intercellulaire requis ; ledit message de relocalisation/transfert intercellulaire requis comportant une indication de l'adresse IP et du port d'accès affectés à la station mobile (31).

13. Noeud à commutation de paquets (24) selon la revendication 12, dans lequel le noeud à commutation de paquets (24) comprend un moyen pour réserver une adresse IP locale et/ou un port UDP local, lors de la réception de la demande de relocalisation/transfert intercellulaire, et inclut un moyen pour communiquer ce ou ces éléments au noeud de commande (32).

14. Noeud à commutation de paquets (24) selon la revendication 12 ou 13, dans lequel le noeud à commutation de paquets (24) comprend en outre un moyen pour déterminer l'achèvement du transfert intercellulaire à partir de paquets en liaison montante envoyés par la station mobile (31).

15. Noeud à commutation de paquets (24) selon l'une quelconque des revendications 12 à 14, dans lequel le noeud à commutation de paquets (24) comprend en outre un moyen pour déclencher l'activation de la porteuse à commutation de paquets requise.
